# EUROPÄISCHE PATENTSCHRIFT

(11) **EP 3 196 527 B1**
(45) Veröffentlichungstag und Bekanntmachung des Hinweises auf die Patenterteilung: **19.02.2020**
(21) Anmeldenummer: 16151879.0
(22) Anmeldetag: 19.01.2016
(51) Int. Cl.: F16L 55/035

(54) **STÜTZANORDNUNG**
SUPPORT ASSEMBLY
SYSTEME D'APPUI

(43) Veröffentlichungstag der Anmeldung: 26.07.2017
(73) Patentinhaber: Geberit International AG, 8645 Jona (CH)
(72) Erfinder: Kipfer, Richard, 8706 Meilen (CH); Röst, Andreas, 8645 Jona (CH)
(74) Vertreter: Frischknecht, Harry Ralph

(56) Entgegenhaltungen:
- EP-A1- 0 585 543
- DE-U1- 9 419 817

## Beschreibung

### TECHNISCHES GEBIET

Die vorliegende Erfindung betrifft eine körperschallentkoppelte Stützanordnung mit einer Rohrleitung und einer die Rohrleitung stützende Rohrschelle nach dem Oberbegriff von Anspruch 1.

### STAND DER TECHNIK

Fallleitungen werden durch den Durchfluss von Medium, meist ein Wasser- und LuftGemisch, in Schwingungen versetzt. Diese Schwingungen werden durch die Befestigung der Fallleitung zum Gebäude auf letzteres übertragen, was zu wahrnehmbaren und unerwünschten Geräuschen führt. Die Befestigung der Fallleitung trägt also wesentlich dazu bei, dass der vom Durchfluss herrührende Schall auf das Gebäude übertragen wird.

In der EP 1 146 276 wird eine Vorrichtung zur Befestigung von Rohren mit wenigstens einer das Rohr fest umspannenden Fixierschelle und einer das Rohr mit einer vorgegebenen Toleranz umgebenden Stützschelle, welche an einer Wand, einem Pfeiler etc. befestigt ist, offenbart. Die Fixierschelle wird dabei fest an das Rohr geklemmt. Die Stützschelle umgibt die Rohrschelle mit Spiel und die Fixierschelle liegt selbstzentrierend an der Stützschelle auf. Hierdurch wird ein in Fallrichtung verlaufendes Rohr gestützt. Die Anordnung hat den Vorteil, dass die Schallübertragung vom Rohr auf das Gebäude, zu welchem die Stützschelle befestigt ist, weitgehend verhindert werden kann.

Allerdings ist der mechanische Aufbau der Vorrichtung nach der EP 1 146 276 sehr aufwändig. Dies insbesondere angesichts der Tatsache, dass pro Lagerstelle zwei Rohrschellen zu montieren sind.

Aus der DE 94 19 817 U1 ist eine weitere Lageranordnung für einen Fallstrang bekannt geworden. Nachteilig an dieser Lagerung ist die Lagerung des Rohrs an der Lagerstelle bezüglich vieler Gesichtspunkte.

### DARSTELLUNG DER ERFINDUNG

Ausgehend von diesem Stand der Technik liegt der Erfindung eine Aufgabe zugrunde, eine Stützanordnung anzugeben, welche die Nachteile des Standes der Technik überwindet. Insbesondere ist es eine Aufgabe der Erfindung, eine Stützanordnung anzugeben, welche unter der Massgabe eine Schallübertragung an ein Bauwerk möglichst zu vermeiden, effizienter montierbar ist.

Mindestens eine derartige Aufgabe löst die Stützanordnung nach dem Anspruch 1. Demgemäss umfasst eine Stützanordnung eine sich entlang einer Mittelachse erstreckende Rohrleitung, eine die Rohrleitung umgebende und stützende Stützschelle sowie mindestens ein mindestens teilweise zwischen Stützschelle und Rohrleitung angeordnetes schalldämmendes Dämmelement. Der Durchmesser der Stützschelle ist auf einen Stützdurchmesser veränderbar. Die Stützschelle und das Dämmelement sind derart ausgebildet, dass wenn die Stützschelle den Stützdurchmesser einnimmt, zwischen Dämmelement, insbesondere im Wirkbereich der Stützschelle, ein Toleranzspalt zwischen Dämmelement und Rohrleitung vorhanden ist. Weiter weist die Rohrleitung eine integral an die Rohrleitung angeformte Anschlagsfläche auf und das Dämmelement weist eine Stützfläche auf, an welcher die Anschlagsfläche derart aufliegt, dass im Wesentlichen eine Axiallagerung in Richtung der Mittelachse bereitgestellt wird.

Durch die Abstützung der Rohrleitung über die integral angeformte Anschlagsfläche erfolgt die Abstützung sehr einfach und insbesondere ohne zusätzlich Elemente, welche den Montageaufwand erhöhen. Durch die Abstützung der Rohrleitung über die Paarung Anschlagsfläche und Dämmelement sowie durch den Toleranzspalt zwischen dem Dämmelement und der Rohrleitung wird die Rohrleitung derart gestützt, dass die Schwingungsübertragung von der Rohrleitung an die Stützschelle minimal ist. Hierdurch kann die Geräuschbildung in Gebäuden minimiert werden. Insbesondere werden fast keine Schwingungen rechtwinklig zur Mittelachse auf die Stützschelle übertragen, was typischerweise die Schallübertragung ist, die es zu verhindern gilt.

Die Rohrleitung wir im Wesentlichen in axiale Richtung gelagert, dass sie ohne radiale Klemmung radial freilagernd in der Stützschelle über das Dämmelement gehalten ist. Die Auflage an der Stützfläche kann aber auch einen Anschlag bezüglich radialen Kräften bereitstellen, eine feste Klemmung ist aber nicht vorgesehen.

Die Abstützung der Rohrleitung erfolgt mit der beanspruchten Anordnung sehr sanft, so dass die von der Rohrleitung herrührenden Schwingungen gut gedämpft werden. Es findet also eine Körperschallentkoppelung der Stützschelle statt.

Vorzugsweise sind die Rohrleitung, die Stützschelle und das Dämmelement derart ausgebildet, dass die Rohrleitung mit der Stützschelle ausschliesslich über die Stützfläche und die Anschlagsfläche in Kontakt stehen. Ein anderer Kontakt ist demnach vorzugsweise nicht vorgesehen.

Unter der Ausdrucksweise "Toleranzspalt" wird ein radialer Spalt zwischen dem Dämmelement und der Rohrleitung verstanden. Das heisst, die Mantelfläche der Rohrleitung liegt nicht an der entsprechenden Mantelfläche des Dämmelementes an. Es gibt also einen Luftspalt zwischen diesen beiden Elementen.

Unter der Ausdrucksweise, dass das Dämmelement mindestens teilweise zwischen Stützschelle und Rohrleitung angeordnet ist, wird verstanden, dass das Dämmelement in Richtung der Mittelachse sich teilweise im Wirkbereich der Stützschelle befinden kann und dass sich das Dämmelement in Richtung der Mittelachse sich einseitig oder beidseitig teilweise aus dem Wirkbereich der Stützschelle erstrecken kann.

Unter dem Ausdruck "Wirkbereich" wird der Bereich der Stützschelle verstanden, welcher radial, also rechtwinklig zur Mittelachse auf die Rohrleitung einwirkt.

Unter der Ausdrucksweise "Stützdurchmesser" ist der minimale Innendurchmesser der Stützschelle verstanden, wenn diese die Rohrleitung stützt. Der Stützdurchmesser ist dabei kleiner als der Aussendurchmesser der Rohrleitung in dem Bereich, in welchem diese durch die Stützschelle hindurch ragt. Dieses Durchmesserverhältnis trifft auf die Stützfläche und die Anschlagsfläche aber nicht zu.

Die Anschlagsfläche ist der Rohrleitung angeformt und bildet einen integralen Bestandteil derselben.

Die Stützschelle ist vorzugsweise aus Metall und das Dämmelement ist vorzugsweise aus einem vergleichsweise weichen Material. Das weiche Material kann beispielsweise ein Elastomer oder Gummi mit einer Shorehärte im Bereich von 40 bis 60 Shore, insbesondere von 50 Shore sein. Die Rohrleitung ist vorzugsweise aus Kunststoff. Die Rohrleitung kann aber auch ein sogenanntes Kompositrohr mit mehreren Schichten aus Metall und Kunststoff oder ein Metallrohr sein.

Vorzugsweise ist die Rohrleitung in der Fallrichtung orientiert. Über die Auflage der Anschlagsfläche der Rohrleitung an der Stützfläche des Dämmelementes sind mindestens Teile der Gewichtskraft der Rohrleitung durch die Stützschelle aufnehmbar.

Die Ausdrucksweise "mindestens Teile der Gewichtskraft" schliesst auch die vollständige Aufnahme der Gewichtskraft der Rohrleitung mit ein. In diesen Fall wäre die Rohrleitung an der Stützschelle aufgehängt.

Vorzugsweise wird die Anschlagsfläche an der Rohrleitung durch eine Vergrösserung des Aussendurchmessers der Rohrleitung bereitgestellt. Die Mantelfläche der Rohrleitung wird also entsprechend erweitert. In einer besonders bevorzugten Variante liegt die Anschlagsfläche im Bereich eines Verbindungsabschnittes der Rohrleitung. Die Anschlagsfläche kann beispielsweise Teil eines als Rohrmuffe ausgebildeten Rohrendes sein.

Vorzugsweise ist im Bereich der Anschlagsfläche die Wandstärke der Rohrleitung konstant, so dass der Innendurchmesser der Rohrleitung im Bereich der Anschlagsfläche vergrössert wird. Dies hat den Vorteil, dass die Anschlagsfläche während des Fertigungsprozesses der Rohrleitung einfach hergestellt werden kann.

Vorzugsweise sind die Anschlagsfläche und die Stützfläche derart ausgebildet, dass es zu einer einfachen annähernden Linienberührung oder mehrfachen annähernden Linienberührung zwischen Anschlagsfläche und Stützfläche kommt. Unter einer annähernden Linienberührung wird verstanden, dass die Kontaktfläche zwischen Anschlagsfläche und Stützfläche sehr dünn ist. Die Linienberührung erstreckt sich mindestens abschnittsweise um die Mittelachse herum.

Die Anschlagsfläche und die Stützfläche sind im wesentlichen formgleich ausgebildet. Das heisst die beiden Flächen weisen vorzugsweise die gleiche oder eine ähnliche geometrische Form auf. Der Durchmesser der Stützfläche ändert mit zunehmenden Abstand von einer Ebene, welche rechtwinklig zur Mittelachse am Ort des minimalen Durchmessers der Stützfläche verläuft, in einem grösseren Mass als der Durchmesser der Anschlagsfläche bei gleich zunehmendem Abstand zu der besagten Ebene. Hierdurch wird ein geometrisches Verhältnis zwischen Stützfläche und Anschlagsfläche geschaffen, welche sicherstellt, dass eine vorteilhafte und flächenmässig nicht allzu grosse Auflage zwischen Anschlagsfläche und Stützfläche bereitgestellt wird.

Vorzugsweise verlaufen die Anschlagsfläche und/oder die Stützfläche winklig geneigt zur Mittelachse. Hierdurch kann die Gewichtskraft in Richtung der Schwerkraft gut von der Rohrleitung auf die Stützschelle übertragen werden.

Vorzugsweise sind die Anschlagsfläche und/oder die Stützfläche gerundet und/oder kegelförmig ausgebildet. Besonders bevorzugt ist der Grad der Rundung oder der Winkel des Kegels zwischen Anschlagsfläche und Stützfläche unterschiedlich.

Im Zusammenhang für die gerundet ausgebildete Stützfläche bzw. Anschlagsfläche kann bezüglich der oben beschriebenen Durchmesseränderung gesagt werden, dass der Krümmungsradius der Rundung der Stützfläche grösser ist als derjenige der Rundung der Anschlagsfläche. Hierdurch kann die graduelle Veränderung des Durchmessers der entsprechenden Fläche von der besagten Ebene einfach erreicht werden. Der Krümmungsradius der Stützfläche kann aber auch gleich des Krümmungsradius der Anschlagsfläche ausgebildet sein.

Im Zusammenhang für die kegelförmig ausgebildete Stützfläche bzw. Anschlagsfläche kann bezüglich der oben beschriebenen Durchmesseränderung gesagt werden, dass der Winkel der Stützfläche zur Mittelachse grösser ist als derjenige der Anschlagsfläche.

Vorzugsweise ist die Stützfläche durch eine Vielzahl von sich um die Mittelachse herum erstreckenden Rillen unterbrochen, so dass mehrere Stützflächenabschnitte, welche sich um die Mittelachse herum erstrecken, bereitstellbar sind. Die Anschlagsfläche liegt dann an den entsprechenden Abschnitten der Stützfläche an. Die Stützfläche liegt mit anderen Worten auf Rippen auf, welche durch die Rillen gebildet werden.

Die Stützfläche kann aber auch im Wesentlichen eben ausgebildet sein. Die Anschlagsfläche ist vorzugsweise im Wesentlichen eben ausgebildet.

Vorzugsweise liegt die Stützfläche ausserhalb und/oder innerhalb des Wirkbereichs der Stützschelle. Die Stützfläche liegt in einer besonders bevorzugten Ausführungsform in Einbaulage vorzugweise leicht oberhalb des Wirkbereichs der Stützschelle.

Vorzugsweise ist der Durchmesser der Stützschelle mittels eines Aktuators, wie einer Schraube, veränderbar, wobei die Stützanordnung bzw. die Stützschelle weiterhin ein den minimalen Innendurchmesser auf den Stützdurchmesser begrenzendes Begrenzungselement aufweist. Das Begrenzungselement sorgt dafür, dass der vorgesehene minimale Durchmesser bei der Montage nicht unterschritten wird, so dass der besagte Toleranzspalt eingehalten wird. Hierdurch wird das Begrenzungselement eine zusätzliche Sicherheit bei der Montage bereitstellen.

Vorzugsweise ist das Begrenzungselement an der Schraube zwischen den beiden Enden der Stützschelle befestigbar. Alternativ kann das Begrenzungselement durch die Stützschelle selbst bereitgestellt werden.

Vorzugsweise sind die Stützschelle und das Dämmelement fest miteinander verbunden. Die Verbindung ist insbesondere in Richtung der Mittelachse fest ausgebildet, so dass die Gewichtskraft von der Rohrleitung über das Dämmelement auf die Stützschelle übertragbar ist. Vorzugsweise umfasst das Dämmelement auf seiner Aussenseite eine umlaufende Nut, in welcher Teile der Stützschelle aufgenommen sind.

Vorzugsweise weist die Stützschelle einen Befestigungsabschnitt auf, über welchen die Stützschelle an ein Gebäude befestigbar ist.

Vorzugsweise umfasst das Dämmelement eine im Wesentlichen zylindrisch um die Mittelachse verlaufende Mantelfläche, welche sich der Stützfläche in Richtung der Mittelachse anschliesst, wobei die Stützschelle bzw. das Dämmelement derart ausgebildet sind, dass die Mantelfläche nicht in Kontakt mit dem Rohrelement bringbar ist, wenn die Stützschelle den Stützdurchmesser einnimmt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Stützanordnung nach einer Ausführungsform der vorliegenden Erfindung bzw. einer Stützschelle nach einer Ausführungsform der vorliegenden Erfindung;
- Fig. 2: eine Detailansicht des Details II der Figur 1;
- Fig. 3: eine Schnittdarstellung durch die Stützanordnung der Figur 1;
- Fig. 4: eine Detailansicht des Details IV der Figur 3;
- Fig. 5: eine schematische Explosionsansicht der Stützanordnung nach Figur 1; und
- Fig. 6: eine Seitenansicht der Stützanordnung nach Figur 1.

### BESCHREIBUNG BEVORZUGTER AUSFÜHRUNGSFORMEN

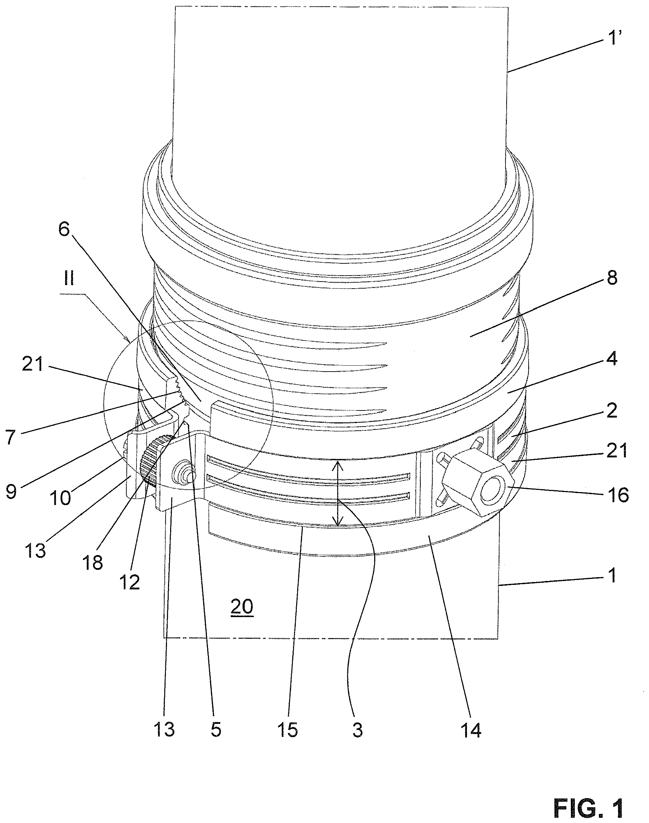

In den Figuren 1 bis 6 wird eine Stützanordnung für eine Rohrleitung 1 bzw. eine Stützschelle 2 für die besagte Stützanordnung gezeigt. Die Stützanordnung umfasst eine sich entlang einer Mittelachse M erstreckende Rohrleitung 1, eine die Rohrleitung 1 umgebende und stützende Stützschelle 2 und ein mindestens teilweise zwischen Stützschelle 2 und Rohrleitung 1 angeordnetes schalldämmendes Dämmelement 4. Das schalldämmende Dämmelement 4 liegt dabei derart zwischen Stützschelle 2 und Rohrleitung 1, dass die Schwingungsübertragung von der Rohrleitung 1 auf die Stützschelle 2 und somit auf das Gebäude, zu welcher die Stützschelle 2 befestigt ist, möglichst minimal ist.

Der Durchmesser der Stützschelle 2 ist auf einen Stützdurchmesser veränderbar. Die Stützschelle 2 und das Dämmelement 4 sind dabei derart ausgebildet, dass wenn die Stützschelle 2 den Stützdurchmesser einnimmt, zwischen Dämmelement 4, insbesondere im Wirkbereich 3 der Stützschelle 2, und der Rohrleitung 1 ein Toleranzspalt 5 vorhanden ist. Durch den Toleranzspalt 5 wird radiales Spiel zwischen Dämmelement 4 und Rohrleitung 1 bereitgestellt.

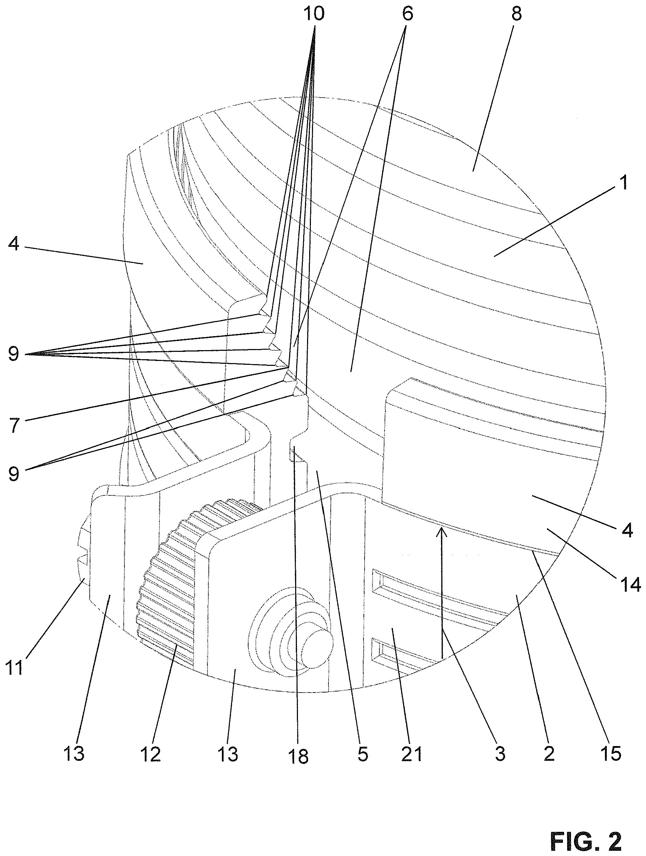

Die Rohrleitung 1 weist eine integral an die Rohrleitung 1 angeformte Anschlagsfläche 6 auf. Die Anschlagsfläche 6 ist also einstückig an der Rohrleitung 1 angeformt und bildet einen Teil von der Rohrleitung 1. Das Dämmelement 4 umfasst eine Stützfläche 7, an welcher die Anschlagsfläche 6 der Rohrleitung 1 aufliegt. Dieses Aufliegen wird in den Figuren 1 und 2 gezeigt. Über den Kontakt zwischen der Anschlagsfläche 6 und der Stützfläche 7 wird die Rohrleitung 1 in der Stützschelle 2 gelagert. Dieser Kontakt ist vorzugsweise der ausschliessliche Kontakt zwischen Rohrleitung 1 und Stützschelle 2. Das heisst, es ist kein weiterer Kontakt ausser demjenigen über die Anschlagsfläche 6 und die Stützfläche 7 zwischen Rohrleitung 1 und Stützschelle 2 vorgesehen.

Die Rohrleitung 1 ist in den gezeigten Figuren in der Fallrichtung F orientiert. Es handelt sich bei der Rohrleitung 1 also im Wesentlichen um eine Fallleitung. Die Fallrichtung F verläuft dabei in der Vertikalen. Über die Auflage der Anschlagsfläche 6 der Rohrleitung 1 an der Stützfläche 7 des Dämmelementes 4 werden mindestens Teile der Gewichtskraft der Rohrleitung 1 durch die Stützschelle 2 übernommen. Das heisst, die Rohrleitung 1 wird über die Auflage der Anschlagsfläche 6 an der Stützfläche 7 in der Stützschelle aufgehängt.

Aufgrund der Orientierung der Rohrleitung 1 in der Vertikalen wirken keine relevanten Kräfte in der Querrichtung zur Vertikalen. Allfällige in diese Richtung wirkende Kräfte können über die Paarung Anschlagsfläche 6 und Stützfläche 7 aufgenommen werden.

Die Stützschelle 2 umgibt die Rohrleitung 1 im Wesentlichen vollständig. Dabei besteht aber kein Kontakt zwischen Stützschelle 2 bzw. Dämmelement 4 ausser dem oben beschriebenen. Falls ungewohnt hohe Kräfte in Querrichtung auftreten sollten, beispielsweise bei einer externen Krafteinwirkung, verhindert die Stützschelle 2 durch das im Wesentlichen vollständige Umgeben der Rohrleitung 1 ein Umkippen der Rohrleitung.

In der gezeigten Ausführungsform verlaufen die Anschlagsfläche 6 und die Stützfläche 7 mit einer winkligen Neigung zur Mittelachse M. Hier sind die Flächen 6, 7 gerundet ausgebildet. Das heisst, die Anschlagsfläche 6 und die Stützfläche 7 stehen dabei derart, dass eine Kraft in Richtung der Mittelachse M zwischen den beiden Flächen 6, 7 übertragbar ist. Es ist auch denkbar, dass diese Flächen kegelförmig ausgebildet sind. Der Grad der Rundung bzw. der Winkel des Kegels zwischen Anschlagsfläche 6 und Stützfläche 7 kann dabei unterschiedlich sein.

Die Stützschelle 2 umfasst in der gezeigten Ausführungsform einen Aktuator 11, hier in der Form einer Schraube. Durch Drehen der Schraube kann der Spalt zwischen den beiden Enden 13 der Stützschelle 2 verkleinert werden, wodurch sich der Durchmesser der Stützschelle 2 verändert. Durch Betätigung der Schraube 11 kann also die Stützschelle 2 auf den Stützdurchmesser bewegt werden. Zwischen den beiden Enden 13 der Stützschelle 2 ist ein Begrenzungselement 12 angeordnet. Das Begrenzungselement 12 dient dabei als Anschlag für die beiden Enden 13, sodass der minimale Stützdurchmesser bei einer weiteren Betätigung der Schraube nicht unterschritten werden kann. Das Begrenzungselement 12 stellt demnach einen Anschlag zwischen den beiden Enden 13 bereit.

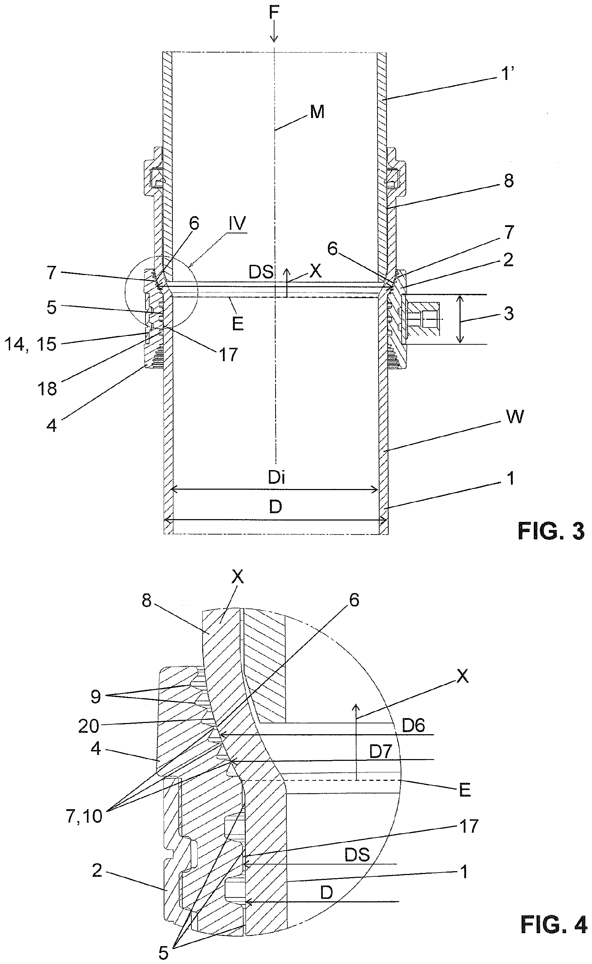

Die Anschlagsfläche 6 wird, wie in den Figuren 3 und 4 gezeigt, durch eine Vergrösserung des Aussendurchmessers D der Rohrleitung 1 bereitgestellt. Dies kann in der Figur 3 im Bereich des Details IV gut erkannt werden. An dieser Stelle wird der Aussendurchmesser D wie auch der Innendurchmesser Di der Rohrleitung 1 erhöht, was an der Mantelfläche 20 der Rohrleitung 1 zur Anschlagsfläche 6 führt.

Die Anschlagsfläche 6 liegt hier im Bereich eines Verbindungsabschnittes 8 der Rohrleitung 1. Der Verbindungsabschnitt 8 ist hier als Muffenaufnahme ausgebildet und dient der Aufnahme einer weiteren Rohrleitung 1'. Die weitere Rohrleitung 1' wird dabei in den Verbindungsabschnitt 8 der Rohrleitung 1, welche über die Stützschelle 2 abgestützt ist, eingeschoben. Die Rohrleitung 1' kann beispielsweise durch eine weitere in den Figuren nicht gezeigte Stützschelle abgestützt werden. Im Bereich der Anschlagsfläche 6 ist vorzugsweise die Wandstärke W der Rohrleitung 1 konstant, so dass der Innendurchmesser der Rohrleitung 1 in diesem Bereich vergrössert wird. Hierdurch kann der besagte Verbindungsabschnitt 8 bereitgestellt werden.

Der Aussendurchmesser D der Rohrleitung 1 ist in dem Bereich, der in der Stützschelle 2 liegt kleiner als der Stützdurchmesser DS der Stützschelle 2, so dass der oben erwähnte Toleranzspalt 5 geschaffen werden kann.

Die Anschlagsfläche 6 und die Stützfläche 7 sind, wie in der Detailansicht 4 dargestellt, derart ausgebildet, dass es zu einer einfachen annähernden Linienberührung oder zu einer mehrfachen annähernden Linienberührung zwischen Anschlagsfläche 6 und Stützfläche 7 kommt. Die annähernde Linienberührung ist dabei so zu verstehen, dass sich die Linie teilweise oder mindestens teilweise um die Mittelachse M herumerstreckt. Diese Linienberührung ist vorteilhaft, weil hierdurch die Schallübertragung von der Rohrleitung 1 auf die Stützschelle 2 verhindert, beziehungsweise weitgehend unterbunden werden kann.

Vorteilhaft ist es, wenn die Anschlagsfläche 6 und die Stützfläche 7 bezüglich ihrer geometrischen Form im Wesentlichen gleichartig ausgebildet sind. Mit anderen Worten sind die beiden Flächen 6, 7 formgleich ausgebildet. Die formgleiche bzw. gleichartige Ausbildung kann in der Figur 4 erkannt werden. In der gezeigten Ausführungsform sind die Anschlagsfläche 6 und die Stützfläche 7 im Wesentlichen gerundet ausgebildet. Der Krümmungsradius der Anschlagsfläche 6 ist dabei unterschiedlich vom Krümmungsradius der Stützfläche 7.

Der Durchmesser D7 der Stützfläche 7 nimmt dabei mit zunehmendem Abstand von einer Ebene E, welche rechtwinklig zur Mittelachse am Ort des minimalen Durchmessers der Stützfläche 7 verläuft, in einem grösseren Mass zu als der Durchmesser D6 der Anschlagsfläche 6 bei gleichbleibendem zunehmendem Abstand zur besagten Ebene E. Das heisst, bei einem bestimmten Abstand X hat sich der Durchmesser der Stützfläche 7 bezüglich des Durchmessers bei der Ebene E zu einem grösseren Mass vergrössert als der Durchmesser der Anschlagsfläche 6 beim gleichen Abstand X.

Die beschriebene Durchmesseränderung kann über unterschiedliche Radien der Rundung oder des Winkel des Kegels erreicht werden.

Die Stützfläche 7 ist in der bevorzugten Ausführungsform so wie in der Figur 4 gezeigt durch eine Vielzahl von sich um die Mittelachse M herumerstreckenden Rillen 9 unterbrochen. Durch die Unterbrechung der Stützfläche 7 werden mehrere Stützflächenabschnitte 10 bereitgestellt, welche sich ebenfalls um die Mittelachse M herumerstrecken. Die Stützfläche 7 setzt sich dann aus diesen mehreren Stützflächenabschnitten 10 zusammen. Diese Ausbildung hat den Vorteil, dass eine gute linienförmige Auflage erreicht werden kann.

Die Stützfläche 7 kann aber auch im Wesentlichen eben, also flach, ausgebildet sein. In diesem Fall wird auf die Rillen 9 entsprechend verzichtet.

Die Anschlagsfläche 6 ist in der gezeigten Ausführungsform im Wesentlichen eben beziehungsweise flach ausgebildet.

In der gezeigten Ausführungsform, so wie dies von den Figuren 3 und 4 erkannt werden kann, liegt die Stützfläche 7 ausserhalb des Wirkbereichs 3 der Stützschelle 2. Das heisst, die Abstützung erfolgt im Wesentlichen ausserhalb dieses Wirkbereichs 3, was den Vorteil hat, dass eine lose Auflage der Rohrleitung 1 an der Stützfläche 7 ermöglicht wird. Die Auflage hat sich bezüglich der Schwingungsübertragung als vorteilhaft erwiesen.

Von den Figuren 3 und 4 kann weiter erkannt werden, dass das Dämmelement 4 eine im Wesentlichen zylindrisch um die Mittelachse M verlaufende Mantelfläche 17 umfasst. Die Mantelfläche 17 erstreckt sich im Wesentlichen im Wirkbereich 3 der Stützschelle 2. Die Mantelfläche 17 umfasst hier mehrere umlaufende Nuten 18. Die Nuten haben den Vorteil, dass bei der Verwendung der Stützschelle als Klemmschelle, wie unten beschrieben, ein einfacherer Toleranzausgleich stattfinden kann. Bei der Klemmschellenfunktion ist es vorteilhaft, wenn die Schelle ganz geschlossen werden kann. Um die

Beidseitig von der Mantelfläche 17 erstreckt sich jeweils je eine Stützfläche 7. Das heisst, das Dämmelement 4 ist bezüglich einer Ebene, die mittig durch das Dämmelement 4 und rechtwinklig zur Mittelachse M verläuft symmetrisch ausgebildet. Es ist aber auch möglich, dass nur eine Stützfläche 7 auf einer Seite der Mantelfläche 17 angeordnet ist.

Auf seiner Aussenseite 14 weist das Dämmelement 4 eine Nute 15 auf, welche ebenfalls um die Mittelachse M umlaufend ausgebildet ist. Die Nute 15 dient im Wesentlichen der Aufnahme der Stützschelle 2. Das heisst, die Stützschelle 2 liegt in der Nute 15. An der Kontaktfläche zwischen Stützschelle 2 und Nute 15 kann beispielsweise ein Klebstoff vorgesehen sein.

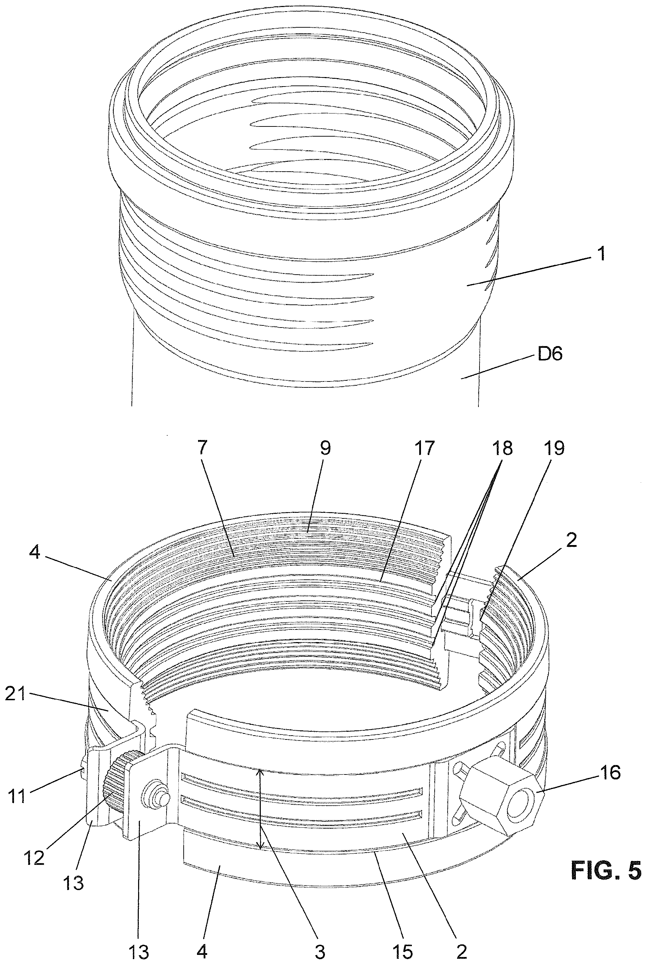

Die Figur 5 zeigt schematisch eine Explosionsdarstellung der Rohrleitung 1 bezüglich der Stützschelle 2. Von der Figur 5 kann gut erkannt werden, dass die Stützschelle 2 hier als zweigeteilte Rohrschelle ausgebildet ist. Die beiden Rohrschellenteile 21 sind über ein Gelenk 19 miteinander in Verbindung. Jedes der Rohrschellenteile 21 umfasst dabei ein Dämmelement 4. Das heisst, die Stützfläche 7, welche durch das Dämmelement 4 bereitgestellt ist, ist nicht vollständig um die Mittelachse M umlaufend ausgebildet.

Von der Figur 5 kann weiterhin erkannt werden, dass die Stützschelle 2 einen Befestigungsabschnitt 16 umfasst, über welchen die Stützschelle 2 zu einem Gebäude befestigt werden kann.

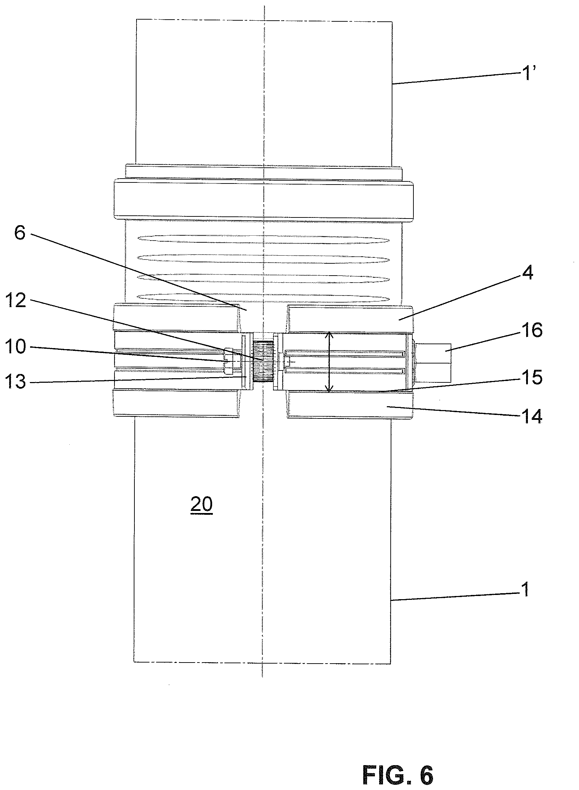

Die Figur 6 zeigt eine Seitenansicht der Stützschelle 2, von welcher gut erkannt werden kann, dass das Begrenzungselement den Spalt zwischen den beiden Enden 13 ausfüllt und so die minimale Spaltbreite limitiert.

Die Stützschelle 2 kann aber nicht nur als Stützschelle sondern auch als Klemmschelle eingesetzt werden. Mit anderen Worten: Die gleiche Stützschelle kann in einer Klemmanordnung auch als Klemmschelle verwendet werden. Dabei kann auf das Begrenzungselement 12 verzichtet werden, wodurch die beiden Enden 13 der Schelle weiter aufeinander zugespannt werden können, wodurch der minimale Durchmesser den Stützdurchmesser unterschreitet und somit eine Klemmwirkung auf die Aussenseite der Rohrleitung bereitgestellt werden kann.

**BEZUGSZEICHENLISTE**

| | | | |
|---|---|---|---|
| 1 | Rohrleitung | Di | Innendurchmesser |
| 2 | Stützschelle | DS | Stützdurchmesser |
| 3 | Wirkbereich | D6 | Durchmesser Anschlagsfläche |
| 4 | Dämmelement | | |
| 5 | Toleranzspalt | D7 | Durchmesser Stützfläche |
| 6 | Anschlagsfläche | E | Ebene |
| 7 | Stützfläche | W | Wandstärke |
| 8 | Verbindungsabschnitt | X | Abstand |
| 9 | Rillen | F | Fallrichtung |
| 10 | Stützflächenabschnitte | M | Mittelachse |
| 11 | Aktuator, Schraube | | |
| 12 | Begrenzungselement | | |
| 13 | Ende | | |
| 14 | Aussenseite | | |
| 15 | umlaufende Nut | | |
| 16 | Befestigungsabschnitt | | |
| 17 | Mantelfläche | | |
| 18 | Nuten | | |
| 19 | Gelenk | | |
| 20 | Mantelfläche | | |
| 21 | Rohrschellenteile | | |
| D | Aussendurchmesser | | |

## Patentansprüche

1. Stützanordnung umfassend
eine sich entlang einer Mittelachse (M) erstreckende Rohrleitung (1),
eine die Rohrleitung (1) umgebende und stützende Stützschelle (2), und
mindestens ein mindestens teilweise zwischen Stützschelle (2) und Rohrleitung (1) angeordnetes schalldämmendes Dämmelement (4),
wobei die Stützschelle (2) und das Dämmelement (4) derart ausgebildet sind, dass wenn die Stützschelle (2) den Stützdurchmesser einnimmt, insbesondere im Wirkbereich (3) der Stützschelle (2), ein Toleranzspalt (5) zwischen Dämmelement (4) und Rohrleitung (1) vorhanden ist, und
wobei die Rohrleitung (1) eine integral an die Rohrleitung (1) angeformte Anschlagsfläche (6) aufweist und dass das Dämmelement (4) eine Stützfläche (7) aufweist, an welcher die Anschlagsfläche (6) derart aufliegt, dass im Wesentlichen eine Axiallagerung in Richtung der Mittelachse (M) bereitgestellt wird,
**dadurch gekennzeichnet,**
**dass** der Durchmesser der Stützschelle (2) auf einen Stützdurchmesser veränderbar ist; und
**dass** die Anschlagsfläche (6) und die Stützfläche (7) im wesentlichen formgleich ausgebildet sind, wobei sich der Durchmesser (D7) der Stützfläche (7) mit zunehmenden Abstand von einer Ebene (E), welche rechtwinklig zur Mittelachse (M) am Ort des minimalen Durchmessers der Stützfläche (7) verläuft, in einem grösseren Mass ändert als der Durchmesser der Anschlagsfläche (6) bei gleich zunehmendem Abstand zur besagten Ebene (E).

2. Stützanordnung nach Anspruch 1, **dadurch gekennzeichnet, dass** die Rohrleitung (1) in der Fallrichtung (F) orientiert ist und dass über die Auflage der Anschlagsfläche (6) der Rohrleitung (1) an der Stützfläche (7) mindestens Teile der Gewichtskraft der Rohrleitung (1) durch die Stützschelle (2) aufnehmbar sind.

3. Stützanordnung nach Anspruch 1 oder 2, **dadurch gekennzeichnet, dass** die Anschlagsfläche (6) durch eine Vergrösserung des Aussendurchmessers (D) der Rohrleitung (1) bereitgestellt wird und/oder dass die Anschlagsfläche (6) im Bereich eines Verbindungsabschnittes (8) der Rohrleitung (1) liegt und/oder dass im Bereich der Anschlagsfläche (6) die Wandstärke (W) der Rohrleitung (1) konstant ist, so dass der Innendurchmesser der Rohrleitung (1) vergrössert wird.

4. Stützanordnung nach einem der vorhergehenden Ansprüche, **dadurch gekennzeichnet, dass** die Anschlagsfläche (6) und die Stützfläche (7) derart ausgebildet sind, dass es zu einer einfachen annähernden Linienberührung oder mehrfachen annähernden Linienberührung zwischen Anschlagsfläche (6) und Stützfläche (7) kommt.

5. Stützanordnung nach einem der vorhergehenden Ansprüche, **dadurch gekennzeichnet, dass** die Anschlagsfläche (6) und/oder die Stützfläche (7) winklig geneigt zur Mittelachse (M) verlaufen und insbesondere gerundet und/oder kegelförmig ausgebildet sind.

6. Stützanordnung nach Anspruch 5, **dadurch gekennzeichnet, dass** der Grad der Rundung oder der Winkel des Kegels zwischen Anschlagsfläche (6) und Stützfläche (7) unterschiedlich oder gleich sind.

7. Stützanordnung nach einem der vorhergehenden Ansprüche, **dadurch gekennzeichnet,**
**dass** die Stützfläche (7) durch eine Vielzahl von sich um die Mittelachse (M) herum erstreckenden Rillen (9) unterbrochen wird, so dass mehrere Stützflächenabschnitte (10), welche sich um die Mittelachse (M) herum erstrecken, bereitstellbar sind; oder dass die Stützfläche (7) im Wesentlichen eben ist;
und/oder
**dass** die Anschlagsfläche (6) im Wesentlichen eben ist.

8. Stützanordnung nach einem der vorhergehenden Ansprüche, **dadurch gekennzeichnet, dass** die Stützfläche (7) ausserhalb und/oder innerhalb des Wirkbereichs der Stützschelle (2) liegt.

9. Stützanordnung nach einem der vorhergehenden Ansprüche, **dadurch gekennzeichnet, dass** der Durchmesser der Stützschelle (2) mittels eines Aktuators (11), wie einer Schraube, veränderbar ist, wobei die Stützanordnung bzw. die Stützschelle (2) weiterhin ein den minimalen Innendurchmesser auf den Stützdurchmesser begrenzendes Begrenzungselement (12) aufweist.

10. Stützanordnung nach Anspruch 9, **dadurch gekennzeichnet, dass** das besagte Begrenzungselement (12) an der Schraube (11) zwischen den beiden Enden (13) der Stützschelle (2) befestigbar ist; oder dass das Begrenzungselement (12) durch die Stützschelle (2) selbst bereitgestellt wird.

11. Stützanordnung nach einem der vorhergehenden Ansprüche, **dadurch gekennzeichnet, dass** die Stützschelle (2) und das Dämmelement (4) fest miteinander verbunden sind, wobei das Dämmelement (4) auf seiner Aussenseite (14) vorzugsweise eine umlaufende Nut (15) umfasst, in welcher Teile der Stützschelle (2) aufgenommen sind und/oder dass die Stützschelle (2) einen Befestigungsabschnitt (16) aufweist, über welchen die Stützschelle (2) an ein Gebäude befestigbar ist.

12. Stützanordnung nach einem der vorhergehenden Ansprüche, **dadurch gekennzeichnet, dass** das Dämmelement (4) eine im Wesentlichen zylindrisch um die Mittelachse verlaufende Mantelfläche (17) umfasst, welche sich der Stützfläche (7) in Richtung der Mittelachse (M) anschliesst, wobei die Stützschelle (2) bzw. das Dämmelement (4) derart ausgebildet sind, dass die Mantelfläche (17) nicht in Kontakt mit dem Rohrelement bringbar ist, wenn die Stützschelle (2) den Stützdurchmesser einnimmt.

## Claims

1. Support assembly comprising a pipeline (1) extending along a centre axis (M), a support clamp (2) surrounding and supporting the pipeline (1), and at least one sound-damping damping element (4) arranged at least partly between support clamp (2) and pipeline (1),
wherein the support clamp (2) and the damping element (4) are designed in such a manner that when the support clamp (2) assumes the support diameter, in particular in the active region (3) of the support clamp (2), a tolerance gap (5) is present between damping element (4) and pipeline (1), and
wherein the pipeline (1) comprises a stop face (6) integrally moulded onto the pipeline (1) and that the damping element (4) comprises a support face (7) on which the stop face (6) is supported in such a manner that substantially an axial mounting in the direction of the centre axis (M) is provided,
**characterized in that** the diameter of the support clamp (2) is variable to a support diameter; and
**in that** the stop face (6) and the support face (7) are substantially formed identical in shape, wherein the diameter (D7) of the support face (7) changes, with increasing distance from a plane (E), which extends at a right angle to the centre axis (M) at the place of the minimum diameter of the support face (7), to a greater degree than the diameter of the stop face (6) with identically increasing distance from said plane (E).

2. Support assembly according to Claim 1, **characterized in that** the pipeline (1) is orientated in the direction of gravity (F) and **in that** via the support of the stop face (6) of the pipeline (1) on the support face (7) at least parts of the weight force of the pipeline (1) can be absorbed by the support clamp (2).

3. Support assembly according to Claim 1 or 2, **characterized in that** the stop face (6) is provided by an enlargement of the outer diameter (D) of the pipeline (1) and/or **in that** the stop face (6) lies in the region of a connecting portion (8) of the pipeline (1) and/or **in that** in the region of the stop face (6) the wall thickness (W) of the pipeline (1) is constant, so that the inner diameter of the pipeline (1) is enlarged.

4. Support assembly according to any one of the preceding claims, **characterized in that** the stop face (6) and the support face (7) are formed in such a manner that a single approximate line contact or multiple approximate line contact between stop face (6) and support face (7) occurs.

5. Support assembly according to any one of the preceding claims, **characterized in that** the stop face (6) and/or the support face (7) extend angularly inclined relative to the centre axis (M) and are formed in particular rounded and/or conical.

6. Support assembly according to Claim 5, **characterized in that** the degree of the rounding or the angle of the cone between stop face (6) and support face (7) are different or the same.

7. Support assembly according to any one of the preceding claims, **characterized in that** the support face (7) is interrupted by a multiplicity of grooves (9) extending round about the centre axis (M), so that multiple support face portions (10), which extend round about the centre axis (M), are providable; or **in that** the support face (7) is substantially flat;
and/or
**in that** the stop face (6) is substantially flat.

8. Support assembly according to any one of the preceding claims, **characterized in that** the support face (7) lies outside and/or within the active region of the support clamp (2).

9. Support assembly according to any one of the preceding claims, **characterized in that** the diameter of the support clamp (2) is variable by means of an actuator (11), such as a screw, wherein the support assembly resp. the support clamp (2) furthermore has a limiting element (12) limiting the minimum inner diameter to the support diameter.

10. Support assembly according to Claim 9, **characterized in that** the said limiting element (12) is attachable to the screw (11) between the two ends (13) of the support clamp (2); or **in that** the limiting element (12) is provided by the support clamp (2) itself.

11. Support assembly according to any one of the preceding claims, **characterized in that** the support clamp (2) and the damping element (4) are firmly connected to one another, wherein the damping element (4) on its outside (14) preferentially comprises a circumferential groove (15), in which parts of the support clamp (2) are received and/or **in that** the support clamp (2) comprises a fastening portion (16), via which the support clamp (2) can be fastened to a building.

12. Support assembly according to any one of the preceding claims, **characterized in that** the damping element (4) comprises a lateral surface (17) which substantially extends cylindrically about the centre axis, which lateral surface (17) follows the support face (7) in the direction of the centre axis (M), wherein the support clamp (2) resp. the damping element (4) is designed in such a manner that the lateral surface (17) cannot be brought into contact with the pipe element when the support clamp (2) assumes the support diameter.

## Revendications

1. Système d'appui comprenant
une canalisation (1) s'étendant le long d'un axe central (M),
un collier d'appui (2) entourant et soutenant la canalisation (1), et
au moins un élément d'isolation sonore (4) disposé au moins en partie entre le collier d'appui (2) et la canalisation (1),
dans lequel le collier d'appui (2) et l'élément d'isolation (4) sont configurés de telle manière que lorsque le collier d'appui (2) se trouve au diamètre d'appui, il existe entre l'élément d'isolation, en particulier dans la région active (3) du collier d'appui (2), une fente de tolérance (5) entre l'élément d'isolation (4) et la canalisation (1), et
dans lequel la canalisation (1) présente une face de butée (6) façonnée intégralement dans la canalisation (1) et l'élément d'isolation (4) présente une face d'appui (7), sur laquelle la face de butée (6) s'applique de telle manière qu'un appui axial soit essentiellement formé dans la direction de l'axe central (M), **caractérisé en ce que**
le diamètre du collier d'appui (2) peut être changé à un diamètre d'appui; et
la face de butée (6) et la face d'appui (7) sont réalisées sous forme essentiellement identique, dans lequel le diamètre (D7) de la face d'appui (7) change, avec une distance croissante d'un plan (E) qui s'étend perpendiculairement à l'axe central (M) à l'endroit du diamètre minimum de la face d'appui (7), dans une mesure plus élevée que le diamètre de la face de butée (6) pour une distance constante dudit plan (E).

2. Système d'appui selon la revendication 1, **caractérisé en ce que** la canalisation (1) est orientée dans le sens de la descente (F) et **en ce qu'**au moins des parties du poids de la canalisation (1) peuvent être reprises par le collier d'appui (2) en raison de l'appui de la face de butée (6) de la canalisation (1) sur la face d'appui (7).

3. Système d'appui selon une revendication 1 ou 2, **caractérisé en ce que** la face de butée (6) est formée par une augmentation du diamètre extérieur (D) de la canalisation (1) et/ou **en ce que** la face de butée (6) est située dans la région d'une partie de raccordement (8) de la canalisation (1) et/ou **en ce que** l'épaisseur de paroi (W) de la canalisation (1) est constante dans la région de la face de butée (6), de telle manière que le diamètre intérieur de la canalisation (1) soit augmenté.

4. Système d'appui selon l'une quelconque des revendications précédentes, **caractérisé en ce que** la face de butée (6) et la face d'appui (7) sont réalisées de telle manière qu'il se forme un contact linéique approximatif simple ou un contact linéique approximatif multiple entre la face de butée (6) et la face d'appui (7) .

5. Système d'appui selon l'une quelconque des revendications précédentes, **caractérisé en ce que** la face de butée (6) et/ou la face d'appui (7) s'étendent avec une inclinaison angulaire par rapport à l'axe central (M) et sont en particulier de forme arrondie et/ou conique.

6. Système d'appui selon la revendication 5, **caractérisé en ce que** le degré d'arrondi ou l'angle du cône entre la face de butée (6) et la face d'appui (7) est différent ou identique.

7. Système d'appui selon l'une quelconque des revendications précédentes, **caractérisé en ce que**
la face d'appui (7) est interrompue par une multiplicité de rainures (9) s'étendant autour de l'axe central (M), de telle manière que plusieurs parties de face d'appui (10) qui s'étendent autour de l'axe central (M) puissent être formées; ou que la face d'appui (7) soit essentiellement plane;
et/ou
la face de butée (6) est essentiellement plane.

8. Système d'appui selon l'une quelconque des revendications précédentes, **caractérisé en ce que** la face d'appui (7) est située à l'extérieur et/ou à l'intérieur de la région active du collier d'appui (2).

9. Système d'appui selon l'une quelconque des revendications précédentes, **caractérisé en ce que** le diamètre du collier d'appui (2) peut être changé au moyen d'un actionneur (11), comme une vis, dans lequel le système d'appui ou le collier d'appui (2) présente en outre un élément de limitation (12) limitant le diamètre intérieur minimal au diamètre d'appui.

10. Système d'appui selon la revendication 9, **caractérisé en ce que** ledit élément de limitation (12) peut être fixé à la vis (11) entre les deux extrémités (13) du collier d'appui (2), ou **en ce que** l'élément de limitation (12) est formé par le collier d'appui (2) lui-même.

11. Système d'appui selon l'une quelconque des revendications précédentes, **caractérisé en ce que** le collier d'appui (2) et l'élément d'isolation (4) sont assemblés fermement l'un à l'autre, dans lequel l'élément d'isolation (4) comprend sur son côté extérieur (14) de préférence une rainure périphérique (15), dans laquelle des parties du collier d'appui (2) sont logées et/ou **en ce que** le collier d'appui (2) présente une partie de fixation (16), par laquelle le collier d'appui (2) peut être fixé à un bâtiment.

12. Système d'appui selon l'une quelconque des revendications précédentes, **caractérisé en ce que** l'élément d'isolation (4) comprend une face latérale essentiellement cylindrique (17) s'étendant autour de l'axe central, qui se raccorde à la face d'appui (7) dans la direction de l'axe central (M), dans lequel le collier d'appui (2) ou l'élément d'isolation (4) est réalisé de telle manière que la face latérale (17) ne puisse pas être mise en contact avec l'élément tubulaire, lorsque le collier d'appui (2) se trouve au diamètre d'appui.
